(19) Europäisches Patentamt
European Patent Office
Office européen des brevets

(11) EP 3 013 747 B1

(12) # FASCICULE DE BREVET EUROPEEN

(45) Date de publication et mention de la délivrance du brevet:
**24.01.2024 Bulletin 2024/04**

(21) Numéro de dépôt: **14749897.6**

(22) Date de dépôt: **26.06.2014**

(51) Classification Internationale des Brevets (IPC):
***C01B 33/44** (2006.01)* ***C09C 1/42** (2006.01)*
***C09C 3/12** (2006.01)*

(52) Classification Coopérative des Brevets (CPC):
**C01B 33/44; C09C 1/0081;** C01P 2002/22; C01P 2002/72; C01P 2004/04; C01P 2004/61; C01P 2004/64

(86) Numéro de dépôt international:
**PCT/FR2014/051636**

(87) Numéro de publication internationale:
**WO 2014/207397 (31.12.2014 Gazette 2014/53)**

(54) **PROCÉDÉ DE PRÉPARATION D'UNE COMPOSITION COMPRENANT DES PARTICULES MINÉRALES FONCTIONNALISÉES ET COMPOSITION**

VERFAHREN ZUR HERSTELLUNG EINER ZUSAMMENSETZUNG MIT FUNKTIONALISIERTEN MINERALTEILCHEN UND ENTSPRECHENDE ZUSAMMENSETZUNG

METHOD FOR PREPARING A COMPOSITION COMPRISING FUNCTIONALISED MINERAL PARTICLES AND CORRESPONDING COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2013 FR 1356230**

(43) Date de publication de la demande:
**04.05.2016 Bulletin 2016/18**

(73) Titulaires:
- **Centre National de la Recherche Scientifique (C.N.R.S.)
75794 Paris Cedex 16 (FR)**
- **Université Paul Sabatier Toulouse III
31400 Toulouse (FR)**

(72) Inventeurs:
- **LE ROUX, Christophe
F-31090 Avignonet Lauragais (FR)**
- **MARTIN, François
F-31570 Sainte Foy D'aigrefeuille (FR)**
- **MICOUD, Pierre
F-31390 Peyssies (FR)**
- **DUMAS, Angela
F-31320 Pechabou (FR)**

(74) Mandataire: **Brevalex
Tour Trinity
1 B Place de la Défense
92400 Courbevoie (FR)**

(56) Documents cités:
**EP-A1- 2 407 425**
**WO-A1-2012/085239**
**US-A1- 2005 215 693**

- **TAKAHASHI N ET AL: "Anion exchangeable layered silicates modified with ionic liquids on the interlayer surface", CHEMISTRY OF MATERIALS 20100608 AMERICAN CHEMICAL SOCIETY USA, vol. 22, no. 11, 8 juin 2010 (2010-06-08), pages 3340-3348, XP002721226, DOI: 10.1021/CM9037439**
- **KIM N H ET AL: "Modification of cationic nanoclays with ionic liquids", MICROPOROUS AND MESOPOROUS MATERIALS, ELSEVIER SCIENCE PUBLISHING, NEW YORK, US, vol. 96, no. 1-3, 26 novembre 2006 (2006-11-26), pages 29-35, XP028038780, ISSN: 1387-1811, DOI: 10.1016/J.MICROMESO.2006.06.017 [extrait le 2006-11-26]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- KARIN E CHABROL ET AL.: "Functionalization of synthetic talc-like phyllosilicates by alkoxyorganosilane grafting", JOURNAL OF MATERIALS CHEMISTRY, vol. 20, no. 43, 21 novembre 2010 (2010-11-21), pages 9695-9706, XP002683079,
- TURHAN Y ET AL: "Characterization and adsorption properties of chemically modified sepiolite", INDUSTRIAL AND ENGINEERING CHEMISTRY RESEARCH 20080319 AMERICAN CHEMICAL SOCIETY US, vol. 47, no. 6, 19 mars 2008 (2008-03-19), pages 1883-1895, XP002721227, DOI: 10.1021/IE070506R
- SALES J A A ET AL: "Some features associated with organosilane groups grafted by the sol-gel process onto synthetic talc-like phyllosilicate", JOURNAL OF COLLOID AND INTERFACE SCIENCE, ACADEMIC PRESS, NEW YORK, NY, US, vol. 297, no. 1, 1 mai 2006 (2006-05-01), pages 95-103, XP024909735, ISSN: 0021-9797, DOI: 10.1016/J.JCIS.2005.10.019 [extrait le 2006-05-01]

## Description

L'invention concerne un procédé de préparation d'une composition comprenant des particules minérales fonctionnalisées par au moins un groupement organique ainsi qu'une composition comprenant des particules minérales fonctionnalisées par au moins un groupement organique.

De nombreux minéraux tels que les borates ou les silicates sont utilisés dans divers domaines industriels.

Le talc naturel, par exemple, est un silicate de magnésium hydroxylé de formule $Si_4Mg_3O_{10}(OH)_2$, appartenant à la famille des phyllosilicates. Les phyllosilicates sont constitués par un empilement irrégulier de feuillets élémentaires de structure cristalline, dont le nombre varie de quelques unités à quelques dizaines d'unités. Parmi les phyllosilicates (silicates lamellaires), le groupe comprenant notamment le talc, le mica et la montmorillonite est caractérisé par le fait que chaque feuillet élémentaire est constitué par l'association de deux couches de tétraèdres situées de part et d'autre d'une couche d'octaèdres. Ce groupe correspond aux phyllosilicates 2:1, dont font notamment partie les smectites. Au vu de leur structure, les phyllosilicates 2:1 sont également qualifiées de type T.O.T. (tétraèdre-octaèdre-tétraèdre).

La couche octaédrique des phyllosilicates 2:1 est formée de deux plans d'ions $O^{2-}$ et $OH^-$ (dans la proportion molaire $O^{2-}/OH^-$ de 2/1). De part et d'autre de cette couche médiane viennent s'agencer des réseaux bidimensionnels de tétraèdres dont un des sommets est occupé par un oxygène de la couche octaédrique, tandis que les trois autres le sont par des oxygènes sensiblement coplanaires.

Les particules minérales phyllosilicatées, telles que le talc, sont utilisées sous forme de fines particules dans de nombreux secteurs industriels, par exemple : le caoutchouc, les thermoplastiques, le papier, la peinture, la pharmacie, la cosmétique, ou encore les produits phytosanitaires. Elles sont utilisées à titre de charge inerte (pour leur stabilité chimique ou encore pour la dilution de composés actifs de coût supérieur) ou de charges fonctionnelles (par exemple pour renforcer les propriétés mécaniques de certains matériaux). Lorsqu'elles sont introduites dans de tels matériaux leur dispersion pose fréquemment des difficultés, et ce, d'autant plus que les particules minérales phyllosilicatées présentent une granulométrie réduite. En effet, les particules minérales les plus fines ont tendance à s'agglomérer entre elles, amenuisant les effets escomptés par leur utilisation sur les propriétés finales des matériaux.

Pour pallier ces problèmes, l'invention vise à proposer un procédé de préparation d'une composition comprenant des particules minérales fonctionnalisées par au moins un groupement organique.

Takahashi N et al., Chem. Mater. 2010, 22, 11, 3340-3348 décrit un procédé de greffage de groupements organiques sur la surface inter-lamellaire d'un octosilicate sodique de formule $Na_8[Si_{32}O_{64}(OH)_8.32H_2O]$. Les groupements organiques sont le 1-butyl-3-(3-triéthoxysilylpropyl)-4,5-dihydroimidazolium (BomSi-$(OEt)_3$) et le 1-octyl-3-(3-triéthoxysilylpropyl)-4,5-dihydroimidazolium (OimSi-$(OEt)_3$).

L'invention vise également à proposer un tel procédé dont la mise en oeuvre est simple et rapide, et est compatible avec les contraintes d'une exploitation industrielle.

L'invention vise également à proposer une composition comprenant des particules minérales fonctionnalisées par au moins un groupement organique.

L'invention vise également à proposer des compositions comprenant des particules minérales synthétiques phyllosilicatées pouvant être utilisées en remplacement de compositions de talc naturel.

Pour ce faire, l'invention concerne un procédé de préparation d'une composition comprenant des particules minérales fonctionnalisées par au moins un groupement organique et présentant une surface spécifique déterminée selon la méthode BET -norme AFNOR X 11 - 621 et 622- supérieure à 500 $m^2/g$, dans lequel :

- on choisit une composition, dite composition phyllosilicatée, comprenant des particules minérales appartenant à la famille des silicates lamellaires, lesdites particules minérales présentant une épaisseur inférieure à 100 nm et une plus grande dimension inférieure à 10 $\mu m$ ;
- on choisit au moins un composé, dit agent de fonctionnalisation, dans le groupe formé des oxysilanes et des oxygermanes présentant au moins un groupement organique,
- on met en contact ladite composition phyllosilicatée avec une solution, dite solution de fonctionnalisation, comprenant ledit agent de fonctionnalisation, de façon à obtenir une composition phyllosilicatée comprenant des particules minérales fonctionnalisées par ledit groupement organique,

caractérisé en ce qu'on choisit le groupement organique dans le groupe formé des groupements hétéroaryles cationiques, des groupements ammonium quaternaire et de leurs sels.

En effet, les inventeurs ont constaté avec surprise qu'un procédé selon l'invention, dans lequel on met en contact des particules minérales phyllosilicatées avec au moins un tel oxysilane fonctionnalisé et/ou au moins un tel oxygermane fonctionnalisé permet d'obtenir des particules minérales fonctionnalisées dont la tendance à s'agglomérer entre elles est réduite de façon importante.

Dans tout le texte, on entend par « groupement hétéroaryle » tout groupement comprenant un ou plusieurs cycles aromatiques de 5 à 18 chainons, et comprenant de 1 à 6 hétéroatomes (choisis parmi l'oxygène, l'azote et le soufre).

Les groupements hétéroaryles cationiques pouvant être portés par lesdits oxysilanes et oxygermanes sont par exemple des groupements imidazolium, des groupements pyridinium ou encore des groupements indolinium.

Dans tout le texte, on entend par « groupement ammonium quaternaire » tout groupement de formule $N^+R_{10}R_{11}R_{12}R_{13}$ dans laquelle $R_{10}$, $R_{11}$, $R_{12}$ et $R_{13}$ sont identiques ou différents et choisis parmi un atome d'hydrogène et les groupements alkyles linéaires ou ramifiés comprenant 1 à 18 atome(s) de carbone.

Avantageusement, dans une variante d'un procédé selon l'invention, les particules minérales sont choisies dans le groupe des phyllosilicates 2:1 non-gonflants. Certains de ces phyllosilicates 2:1 non-gonflants (par exemple le mica) présentent un cation dans l'espace interfoliaire et d'autres (par exemple le talc) présentent un vide interfoliaire et ne permettent pas d'échange de cations interfoliaires. On entend par « vide interfoliaire » le fait que de tels phyllosilicates 2:1 non-gonflants sont exempts de tout cation interfoliaire, de tout anion interfoliaire et de toute molécule -notamment de molécule d'eau- interfoliaire.

Avantageusement et selon l'invention, ledit agent de fonctionnalisation a pour formule chimique :

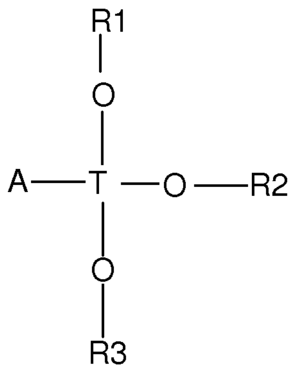

(I)

dans laquelle :

- A désigne ledit groupement organique,
- T est choisi dans le groupe formé du silicium et du germanium, et
- R1, R2 et R3 sont identiques ou différents, et choisis dans le groupe formé de l'hydrogène et des groupements alkyles linéaires comprenant 1 à 3 atome(s) de carbone.

Avantageusement et selon l'invention, ledit groupement organique (groupement organique A) a pour formule chimique :

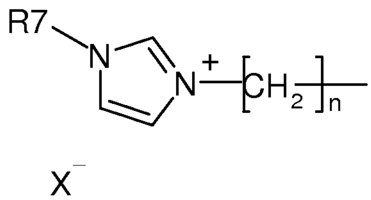

dans laquelle :

- R7 est choisi parmi les groupements alkyles linéaires ou ramifiés comprenant 1 à 18 atome(s) de carbone,
- n est un nombre entier compris entre 3 et 11,
- X est un anion choisi dans le groupe formé de l'ion bromure, l'ion iodure, l'ion chlorure, l'anion trifluorométhanesulfonate, l'anion acétate, l'anion nitrate et l'anion nitrite.

Avantageusement et selon l'invention, R7 est choisi dans le groupe formé des groupements alkyles linéaires et des groupements alkyles ramifiés et comprenant 1 à 18 atome(s) de carbone, notamment 1 à 10 atome(s) de carbone et en particulier 1 à 4 atome(s) de carbone.

Avantageusement, A est un groupement cationique soluble en milieu aqueux, A contribue à conférer un caractère hydrosoluble audit oxysilane, et/ou audit oxygermane.

Plus particulièrement, R1, R2 et R3 représentent chacun un groupement méthyle ($-CH_3$) ou éthyle ($-CH_2-CH_3$). Ainsi, dans une variante particulièrement avantageuse d'un procédé selon l'invention, ledit oxysilane a pour formule :

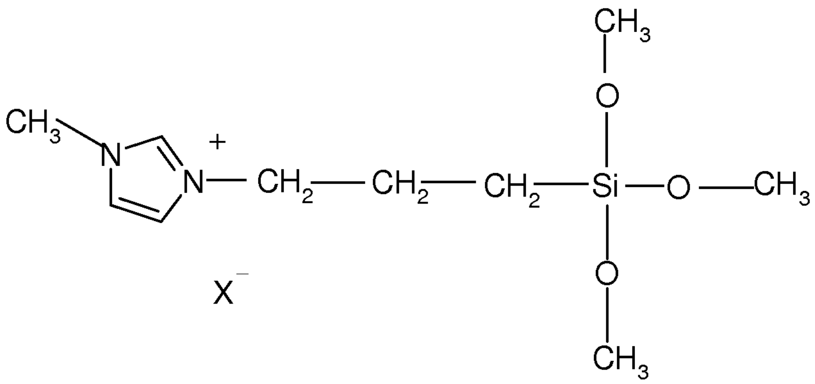

dans laquelle $X^-$ est un anion dans lequel X est choisi dans le groupe formé du chlore, de l'iode et du brome. Dans ce cas, l'oxysilane (un trialcoxysilane) est un sel de 1-(triméthoxy-silyl-propyl)-3-méthyl-imidazolium.

Avantageusement et selon l'invention, on choisit ledit agent de fonctionnalisation dans le groupe formé des oxysilanes et des oxygermanes solubles en milieu aqueux. En particulier, avantageusement et selon l'invention, lesdits oxysilanes et lesdits oxygermanes sont solubles au moins en partie dans l'eau et éventuellement solubles en toutes proportion dans l'eau.

Avantageusement et selon l'invention, ladite solution de fonctionnalisation est une solution aqueuse.

Ainsi, un procédé selon l'invention ne nécessite pas l'utilisation de solvants organiques dangereux pour l'homme ou l'environnement mais peut être réalisée de façon tout à fait avantageuse en milieu aqueux.

Dans tout le texte, on désigne par « milieu aqueux » tout milieu liquide comprenant de l'eau et éventuellement un ou plusieurs autre(s) solvant(s) miscible(s) avec l'eau. Il peut par exemple s'agir d'un milieu hydro-alcoolique comprenant de l'eau et de l'éthanol.

Avantageusement et selon l'invention, on choisit une composition phyllosilicatée comprenant des particules minérales dans le groupe formé des talcs, des pyrophyllites, des micas (tels que la muscovite, la paragonite ou encore l'illite), des smectites (telles que la montmorillonite, la saponite, l'hectorite ou encore la beidellite), des kaolinites, des serpentinites, des chlorites et de leurs mélanges.

Avantageusement et selon l'invention, ladite composition phyllosilicatée comprend des particules minérales ayant pour formule chimique :

$$(Si_xGe_{1-x})_4M_3O_{10}(OH)_2$$

- Si désignant le silicium,
- Ge désignant le germanium,
- x étant un nombre réel de l'intervalle [0 ;1], et
- M désignant un métal (un atome métallique), et notamment M désignant au moins un métal divalent et ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque y(i) représentant un nombre réel de l'intervalle [0 ;1], et tel que $\sum_{i=1}^{8} y(i) = 1$.

Dans une variante particulièrement avantageuse d'un procédé selon l'invention, ladite composition phyllosilicatée utilisée comprend des particules de talc ayant pour formule chimique $Si_4Mg_3O_{10}(OH)_2$.

Avantageusement et selon l'invention, lesdites particules minérales présentent une épaisseur inférieure à 100 nm et une plus grande dimension inférieure à 10 µm. Avantageusement et selon l'invention, lesdites particules présentent une épaisseur comprise entre 1 nm et 150 nm, en particulier entre 5 nm et 50 nm, et une plus grande dimension comprise entre 20 nm et 10 µm.

Dans tout le texte, on désigne par « épaisseur » des particules minérales silicatées la plus petite dimension desdites particules, soit la dimension desdites particules selon la direction c du réseau cristallin desdites particules minérales silicatées.

Dans tout le texte, on désigne par « plus grande dimension » des particules minérales silicatées, la plus grande dimension desdites particules dans le plan (a, b) du réseau cristallin desdites particules minérales silicatées.

L'épaisseur et la plus grande dimension des particules minérales silicatées sont mesurées par observation par

microscopie électronique à balayage (MEB) ou par microscopie électronique en transmission (MET).

Dans un procédé selon l'invention, la durée de l'étape de fonctionnalisation pendant laquelle on met en contact ladite composition phyllosilicatée avec au moins un agent de fonctionnalisation (oxysilane et/ou oxygermane), la concentration de chaque agent de fonctionnalisation dans la solution de fonctionnalisation et la température à laquelle a lieu cette étape, sont adaptées pour permettre une fixation dudit groupement organique aux particules minérales phyllosilicatées de ladite composition phyllosilicatée et donc une fonctionnalisation de la composition phyllosilicatée. Avantageusement et selon l'invention, ladite durée prédéterminée, pendant laquelle on met en contact ladite composition phyllosilicatée avec la solution de fonctionnalisation, est comprise entre 5 secondes et 30 jours, et en particulier entre 5 minutes et 2 heures.

Avantageusement et selon l'invention, la concentration en oxysilane(s) et/ou oxygermane(s) présent(s) dans la solution de fonctionnalisation est comprise entre 0,005 mol/L et la concentration à saturation de celui-ci dans le milieu. La concentration en oxysilane(s) et/ou oxygermane(s) présent(s) dans la solution de fonctionnalisation est par exemple comprise entre 0,01 mol/L et 3 mol/L.

Avantageusement et selon l'invention, on met en contact le(s) agent(s) de fonctionnalisation et les particules minérales phyllosilicatées dans la solution de fonctionnalisation de telle façon que le rapport molaire entre le(s) agent(s) de fonctionnalisation et les particules minérales phyllosilicatées (nombre de moles d'oxysilane(s) et/ou d'oxygermane(s) / nombre de moles de particules minérales phyllosilicatées) est compris entre 0,01 et 0,5, notamment entre 0,05 et 0,3.

En outre, avantageusement et selon l'invention, cette étape de fonctionnalisation a lieu à une température comprise entre 5°C et 100°C. La mise en contact qui a lieu dans cette étape d'un procédé selon l'invention peut par exemple être opérée à température ambiante (20°C à 25°C) ou encore à une température légèrement supérieure à la température ambiante, par exemple entre 25°C et 40°C.

L'étape de fonctionnalisation peut être réalisée sous agitation ou non. En particulier, avantageusement et selon l'invention, on met en contact ladite composition phyllosilicatée avec la solution de fonctionnalisation sous agitation, par exemple sous agitation magnétique à l'aide d'un agitateur magnétique.

À l'issue de cette étape de fonctionnalisation d'un procédé selon l'invention, la composition phyllosilicatée fonctionnalisée obtenue peut être récupérée par élimination de la solution aqueuse de fonctionnalisation. La solution aqueuse de fonctionnalisation peut par exemple être éliminée après décantation spontanée de ladite composition phyllosilicatée fonctionnalisée (en laissant la solution au repos) et élimination de la solution surnageante ou encore par centrifugation de la solution de fonctionnalisation comprenant ladite composition phyllosilicatée fonctionnalisée obtenue. La composition phyllosilicatée fonctionnalisée comprenant des particules minérales phyllosilicatées fonctionnalisées récupérée peut ensuite être rincée de manière à éliminer les oxysilanes et/ou les oxygermanes restants. Ainsi, avantageusement, dans un procédé selon l'invention, consécutivement à l'étape de fonctionnalisation, on rince les particules minérales phyllosilicatées fonctionnalisées obtenues à l'aide d'une solution aqueuse au moins sensiblement dépourvue d'oxysilanes et d'oxygermanes.

À l'issue de cette étape de fonctionnalisation d'un procédé selon l'invention, la composition phyllosilicatée fonctionnalisée obtenue peut être conservée ou utilisée en l'état, sous forme de gel ou de suspension aqueuse, ou encore être séchée de manière à éliminer au moins en partie, la solution aqueuse, notamment l'eau, encore présente. Avantageusement et selon l'invention, on sèche les particules minérales phyllosilicatées fonctionnalisées obtenues après fonctionnalisation, et avant ou après un éventuel rinçage. Ce séchage peut être effectué par tout moyen de séchage permettant l'élimination de cette solution aqueuse. Le séchage peut par exemple être opéré directement dans une étuve (par exemple à une température de l'ordre de 100°C), par atomisation, par séchage par irradiation aux microondes ou encore par lyophilisation.

Par ailleurs, il est possible de réitérer au moins une fois ladite étape de fonctionnalisation au cours de laquelle la composition phyllosilicatée est mise en contact avec la solution de fonctionnalisation. De cette façon, il est possible de modifier de façon plus ou moins importante le taux de fonctionnalisation (ou taux de greffage) de la composition phyllosilicatée.

Après la fonctionnalisation des particules minérales de la composition phyllosilicatée, il est également possible de réaliser un échange au moins partiel de l'anion $X^-$. Ainsi, avantageusement et selon l'invention, après avoir mis en contact ladite composition phyllosilicatée avec la solution de fonctionnalisation on réalise un échange au moins partiel de l'anion X par au moins une espèce anionique différente de $X^-$ et choisie dans le groupe formé de l'ion bromure $Br^-$, l'ion iodure $I^-$, l'ion chlorure, l'anion bis-(trifluorométhanesulfonyl)amidure, l'anion trifluorométhanesulfonate, l'anion hexafluorophosphate, l'anion tétrafluoroborate, l'anion acétate, l'anion nitrate $NO_3^-$ et l'anion nitrite $NO_2^-$. Un tel échange par métathèse permet de moduler à façon le caractère plus ou moins hydrophile ou hydrophobe des particules minérales fonctionnalisées préparées. L'anion bis-(trifluorométhanesulfonyl)amidure présente par exemple un important caractère hydrophobe.

En outre, après la fonctionnalisation des particules minérales de la composition phyllosilicatée, il est en particulier possible de réaliser un échange au moins partiel de l'anion X, lorsque X est choisi dans le groupe formé du chlore, du brome et de l'iode, en mettant lesdites particules minérales fonctionnalisées en contact avec une solution comprenant

un sel métallique, en particulier un sel d'argent ($AgNO_3$ par exemple). Avantageusement et selon l'invention, après avoir mis en contact ladite composition phyllosilicatée avec la solution de fonctionnalisation on réalise un échange au moins partiel de l'anion X, lorsque X est choisi dans le groupe formé du chlore, du brome et de l'iode, en ajoutant au moins un sel d'argent, en particulier un sel d'argent hydrosoluble. De cette manière, en laissant vieillir la solution comprenant lesdites particules minérales fonctionnalisées et ledit sel d'argent, on observe la formation de particules nanométriques d'argent associées aux particules minérales, celles-ci ayant pour avantage de présenter des propriétés bactéricides.

Avantageusement et selon l'invention, on prépare lesdites particules minérales phyllosilicatées par un traitement hydrothermal d'un hydrogel précurseur silico/germano-métallique comprenant des particules de formule $(Si_xGe_{1-x})_4M_3O_{11}$, $n'H_2O$ dans laquelle :

- Si désigne le silicium,
- Ge désigne le germanium,
- x est un nombre réel de l'intervalle [0 ; 1],
- M désigne au moins un -notamment un- atome métallique,
- n' est relatif à un nombre de molécule(s) d'eau associée(s) audit hydrogel.

En particulier, le métal M est choisi dans le groupe formé du magnésium, du cobalt, du zinc, du cuivre, du manganèse, du fer, du nickel et du chrome.

Selon une autre formulation, l'hydrogel précurseur comprend :

- 4 atomes de silicium et/ou de germanium d'après la formule chimique suivante : 4 $(Si_xGe_{1-x})$, x étant un nombre réel de l'intervalle [0 ; 1],
- 3 atomes de métal M, M désignant au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$ dans laquelle chaque y(i) représente un nombre réel de l'intervalle [0 ; 1], et tel que $\sum_{i=1}^{8} y(i) = 1$,
- (10-ε) atomes d'oxygène ((10-ε) O), ε étant un nombre réel de l'intervalle [0 ; 10[,
- (2+ε) groupements hydroxyle ((2+ε) (OH)), ε étant un nombre réel de l'intervalle [0 ; 10[.

L'hydrogel précurseur répond donc à la formule chimique (II) suivante :

$$4(Si_xGe_{1-x})3M((10-\varepsilon)O)((2+\varepsilon)(OH)) \qquad (II).$$

Des molécules d'eau peuvent en outre être liées aux particules de cet hydrogel précurseur. Il s'agit de molécules d'eau adsorbées ou physisorbées aux particules d'hydrogel précurseur et non de molécules d'eau de constitution habituellement présentes dans les espaces interfoliaires de certaines particules phyllosilicatées.

Dans tout le texte, on désigne par « traitement hydrothermal sous pression » tout traitement réalisé dans un récipient fermé, tel qu'un autoclave, en présence d'eau à une température prédéterminée et à une pression supérieure à la pression atmosphérique.

La durée du traitement hydrothermal est adaptée pour permettre l'obtention desdites particules minérales phyllosilicatées, en fonction notamment de la température à laquelle est réalisé le traitement hydrothermal. Avantageusement et selon l'invention, on réalise ledit traitement hydrothermal pendant une durée comprise entre 1 seconde et 60 jours, notamment entre 30 minutes et 24 heures.

Avantageusement et selon l'invention, on réalise le traitement hydrothermal dudit hydrogel précurseur dans une enceinte à volume constant, par exemple au moyen d'un autoclave. Il peut par exemple s'agir d'un autoclave formé d'un alliage à base de nickel tel que l'Hastelloy® (commercialisé par Haynes International, Kokomo, Etats-Unis) ou encore d'un autoclave en titane ou éventuellement en acier à chemisage intérieur en polytétrafluoroéthylène (PTFE). Un tel autoclave peut présenter toute contenance, par exemple une contenance allant de 200 mL à 50 L.

Le traitement hydrothermal peut être réalisé avec ou sans agitation mécanique. Dans une variante particulièrement avantageuse d'un procédé selon l'invention, on réalise ledit traitement hydrothermal sous agitation mécanique. A cet effet, on peut par exemple utiliser un autoclave muni d'une hélice métallique interne.

Avantageusement et selon l'invention, on réalise ledit traitement hydrothermal à une pression comprise entre 0,5 MPa (5 bars) et 20 MPa (200 bars). Avantageusement et selon l'invention, on réalise ledit traitement hydrothermal sous pression autogène, c'est-à-dire à une pression au moins égale à la pression de vapeur saturante de l'eau (pression à laquelle la phase vapeur est en équilibre avec la phase liquide). La pression autogène atteinte dans l'autoclave au cours du traitement hydrothermal dépend donc notamment de la température à laquelle on réalise ledit traitement

hydrothermal, du volume de l'autoclave et de la quantité d'eau présente. Il est également possible de réaliser le traitement hydrothermal à une pression supérieure à la pression de vapeur saturante de l'eau ou à la pression autogène, dans le récipient dans lequel a lieu le traitement hydrothermal. Pour ce faire, on injecte un gaz chimiquement neutre vis-à-vis de la réaction hydrothermale dans l'autoclave ou le récipient dans lequel a lieu le traitement hydrothermal. Un tel gaz est choisi dans le groupe formé des gaz inertes (gaz rares), en particulier l'argon, du diazote ($N_2$), du dioxyde de carbone et de l'air (air comprimé).

Avantageusement et selon l'invention, on rajoute dans l'autoclave, avec ledit hydrogel précurseur, une quantité d'eau (de préférence de l'eau distillée) au moins suffisante pour créer, à l'intérieur de cet autoclave porté à la température de traitement, une atmosphère de vapeur saturante.

Avantageusement et selon l'invention, on réalise le traitement hydrothermal avec un hydrogel précurseur, liquéfié ayant un rapport liquide/solide compris entre 2 et 20, notamment entre 5 et 15 (la quantité de liquide étant exprimée en $cm^3$, et la quantité de solide, en grammes, et désignant la quantité d'hydrogel uniquement). Eventuellement, si nécessaire, on rajoute audit hydrogel précurseur liquéfié une quantité d'eau appropriée pour atteindre ce rapport.

Avantageusement et selon l'invention, on prépare l'hydrogel précurseur par une réaction de co-précipitation entre :

- au moins un composé comprenant du silicium et/ou du germanium tel que le métasilicate de sodium ou le métagermanate de sodium ou encore la silice, et
- au moins un sel métallique,

de façon à obtenir un hydrogel précurseur silico/germano-métallique hydraté comprenant 4 atomes de silicium et/ou de germanium pour 3 atomes d'au moins un métal M.

Avantageusement et selon l'invention, ledit sel métallique utilisé pour la préparation de l'hydrogel précurseur est choisi parmi les sels métalliques du magnésium, du cobalt, du zinc, du cuivre, du manganèse, du fer, du nickel et/ou du chrome peut être utilisé dans un procédé selon l'invention. En particulier, avantageusement et selon l'invention, ledit sel métallique est choisi parmi les chlorures métalliques (de formule $MCl_2$) et les acétates métalliques (de formule $M(CH_3COO)_2$) (M pouvant être choisi dans le groupe formé du magnésium, du cobalt, du zinc, du cuivre, du manganèse, du fer, du nickel et du chrome) et les sulfates métalliques. Préférentiellement, ledit sel métallique est choisi parmi $MgCl_2$, $CoCl_2$, $ZnCl_2$, $CuCl_2$, $MnCl_2$, $FeCl_2$, $NiCl_2$, $CrCl_2$ et $Mg(CH_3COO)_2$, $Co(CH_3COO)_2$, $Zn(CH_3COO)_2$, $Cu(CH_3COO)_2$, $Mn(CH_3COO)_2$, $Ni(CH_3COO)_2$ et $Cr(CH_3COO)_2$.

Dans une variante de réalisation selon l'invention, on réalise la réaction de co-précipitation de l'hydrogel précurseur et/ou le traitement hydrothermal de l'hydrogel précurseur en présence d'un sel carboxylate. Il s'agit en particulier d'un sel carboxylate de formule R8-COOM' dans laquelle :

- M' désigne un métal choisi dans le groupe formé de Na et K, et
- R8 est choisi dans le groupe formé de H et des groupements alkyles comprenant moins de 5 atomes de carbone.

L'invention concerne également une composition susceptible d'être obtenue par un procédé selon l'invention.

L'invention concerne donc également une composition, dite composition phyllosilicatée, comprenant des particules minérales appartenant à la famille des silicates lamellaires, caractérisée en ce que lesdites particules minérales présentent :

- une épaisseur inférieure à 100 nm et une plus grande dimension inférieure à 10$\mu$m;
- une surface spécifique déterminée selon la méthode BET -norme AFNOR X 11 - 621 et 622- supérieure à 500 $m^2/g$, et ;
- au moins un groupement organique choisi dans le groupe formé des groupements hétéroaryles cationiques, des groupements ammonium quaternaire et de leurs sels.

Avantageusement et selon l'invention, ladite composition phyllosilicatée comprend des particules minérales ayant pour formule chimique :

$$(Si_xGe_{1-x})_4M_3O_{10}(OH)_2$$

- Si désignant le silicium,
- Ge désignant le germanium,
- x étant un nombre réel de l'intervalle [0 ;1],
- M désignant un métal, et, en particulier au moins un métal divalent et ayant pour formule

$Mg_{y(1)}Co_{y(2)}Zn_{y(3)}Cu_{y(4)}Mn_{y(5)}Fe_{y(6)}Ni_{y(7)}Cr_{y(8)}$; chaque y(i) représentant un nombre réel de l'intervalle [0 ;1], et tel que $\sum_{i=1}^{8} y(i) = 1$.

Avantageusement et selon l'invention, lesdites particules minérales présentent une épaisseur inférieure à 100 nm et une plus grande dimension inférieure à 10 µm.

Avantageusement et selon l'invention, lesdites particules minérales (c'est-à-dire les particules minérales fonctionnalisées) présentent une surface spécifique supérieure à 500 $m^2/g$, notamment supérieure à 600 $m^2/g$ et en particulier supérieure à 700 $m^2/g$.

Avantageusement et selon l'invention, lesdites particules minérales fonctionnalisées comprennent 0,001 millimoles à 4 millimoles dudit groupement organique par gramme de particules minérales.

L'invention concerne aussi un procédé de traitement d'une composition comprenant des particules minérales synthétiques et une composition comprenant des particules minérales synthétiques caractérisés en combinaison par tout ou partie des caractéristiques mentionnées ci-dessus ou ci-après.

D'autres buts, avantages et caractéristiques de l'invention apparaissent à la lecture de la description et des exemples qui suivent et qui se réfèrent aux figures annexées.

La figure 1 présente un diffractogramme RX d'une composition selon l'invention sur lequel est représentée l'intensité relative du signal (nombre de coups par seconde) en fonction de la distance inter-réticulaire en Angstroem.

La figure 2 présente un spectre en RMN du proton d'une composition selon l'invention, réalisé à l'aide d'un spectromètre BRUKER® Avance 400®.

La figure 3 présente un spectre en RMN du carbone d'une composition selon l'invention, réalisé à l'aide d'un spectromètre BRUKER® Avance 400®.

La figure 4 présente un spectre en RMN du silicium d'une composition selon l'invention, réalisé à l'aide d'un spectromètre BRUKER® Avance 400®.

La figure 5 présente une image obtenue par microscopie électronique à balayage et à effet de champ d'une composition selon l'invention.

Une composition phyllosilicatée utilisée dans un procédé selon l'invention peut par exemple être préparée selon le protocole de synthèse suivant.

A/ - PROTOCOLE GENERAL DE SYNTHESE D'UNE COMPOSITION UTILISÉE DANS UN PROCÉDÉ SELON L'INVENTION

1/ - Préparation d'un hydrogel précurseur silico/germano-métallique

Selon une première variante, l'hydrogel silico/germano-métallique est préparé par une coprécipitation selon l'équation de réaction suivante :

$$4\begin{pmatrix}(Na_2OSiO_2)_x \\ (Na_2OGeO_2)_{1-x}\end{pmatrix} + 2HCl + mH_2O + 3\begin{pmatrix} y_{(1)}(MgCl_2) + y_{(2)}(CoCl_2) + y_{(3)}(ZnCl_2) \\ + y_{(4)}(CuCl_2) + y_{(5)}(MnCl_2) + y_{(6)}(FeCl_2) \\ + y_{(7)}(NiCl_2) + y_{(8)}(CrCl_2)\end{pmatrix}$$

$$\longrightarrow [(Si_xGe_{1-x})_4M_3O_{11}, n'H_2O] + 8NaCl + (m-n'+1)H_2O$$

Cette réaction de coprécipitation permet d'obtenir un hydrogel silico/germano-métallique hydraté ayant la stoechiométrie du talc (4 atomes de silicium (Si) et/ou de germanium (Ge) pour 3 atomes dudit métal divalent M).

Elle est mise en oeuvre à partir de :

1. une solution aqueuse de métasilicate de sodium penta-hydraté ou une solution aqueuse de métagermanate de sodium, ou un mélange de ces deux solutions dans les proportions molaires *x*:(1-*x*),
2. une solution de chlorure de métal, préparée avec un ou plusieurs sels de métal (sous la forme de cristaux

hygroscopiques) dilué(s) dans de l'eau distillée, et
3. une solution d'acide chlorhydrique 1N.

La préparation de l'hydrogel silico/germano-métallique est réalisée en suivant le protocole suivant :

1. on mélange les solutions d'acide chlorhydrique et la solution de chlorure(s) de métal (ou de métaux),
2. on ajoute ce mélange à la solution de métasilicate et/ou de métagermanate de sodium ; le gel de coprécipitation se forme instantanément,
3. on récupère le gel après centrifugation (à 7000 tours/min, pendant 15 min) et élimination du surnageant (solution de chlorure de sodium formée),
4. on lave le gel avec de l'eau distillée ou osmosée, ou avec de l'eau du robinet (au minimum deux cycles de lavage/centrifugation sont nécessaires).

Selon une deuxième variante, l'hydrogel silico/germano-métallique peut être préparé par une réaction de coprécipitation impliquant, à titre de réactif, au moins un composé comprenant du silicium, au moins un sel dicarboxylate de formule $M(R9\text{-}COO)_2$ (R9 étant choisi parmi H et les groupements alkyles comprenant moins de 5 atomes de carbone) en présence d'au moins un sel carboxylate de formule R8-COOM' dans laquelle M' désigne un métal choisi dans le groupe formé de Na et K, et R8 est choisi dans le groupe formé de H et des groupements alkyles comprenant moins de 5 atomes de carbone.

Cette réaction de coprécipitation permet d'obtenir un hydrogel silico/germano-métallique hydraté ayant la stoechiométrie du talc (4 Si/Ge pour 3 M, M ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque y(i) représentant un nombre réel de l'intervalle [0 ;1], et tel que $\sum_{i=1}^{8} y(i) = 1$ ).

L'hydrogel silico/germano-métallique est préparé par une réaction de coprécipitation mise en oeuvre à partir de :

1. une solution aqueuse de métasilicate de sodium penta-hydraté ou une solution aqueuse de métagermanate de sodium, ou un mélange de ces deux solutions dans les proportions molaires $x$:(1-$x$),
2. une solution de sel(s) dicarboxylate(s), préparée avec un ou plusieurs sel(s) dicarboxylate(s) de formule(s) $M(R9\text{-}COO)_2$ dilué(s) dans un acide carboxylique, tel que l'acide acétique, et
3. une solution de sel(s) carboxylate(s), préparée avec un ou plusieurs sel(s) carboxylate(s) de formule(s) R8-COOM' dilué(s) dans de l'eau distillée.

La préparation de cet hydrogel silico/germano-métallique est réalisée en suivant le protocole suivant :

1. on mélange les solutions de métasilicate de sodium et de sel(s) carboxylate(s) de formule(s) R8-COOM',
2. on y ajoute rapidement la solution de sel(s) dicarboxylate(s) de formule(s) $M(R9\text{-}COO)_2$; l'hydrogel de coprécipitation se forme instantanément.

A l'issue de cette première phase, on obtient un hydrogel silico/germano-métallique - $(Si_xGe_{1-x})_4M_3O_{11}$, n'$H_2O$ - hydraté et de consistance gélatineuse (éventuellement en présence du ou des sel(s) carboxylate(s) de formule(s) R8-COOM' et R9-COOM' dans le cas de la deuxième variante). Ce gel présente un comportement thixotropique, c'est-à-dire qu'il passe d'un état visqueux à un état liquide lorsqu'on l'agite, puis retrouve son état initial si on le laisse au repos pendant un temps suffisant. L'hydrogel silico/germano-métallique précurseur répond donc aussi à la formule (II) 4 $(Si_xGe_{1-x})$ 3 M ((10-ε)O)((2+ε)(OH)), dans laquelle :

- x est un nombre réel de l'intervalle [0 ; 1], et
- ε est un nombre réel de l'intervalle [0 ; 10[.

Le gel silico/germano-métallique peut également être récupéré après centrifugation (par exemple entre 3000 et 15 000 tours par minute, pendant 5 à 60 minutes) et élimination du surnageant, éventuellement lavage à l'eau déminéralisée (par exemples deux lavages et centrifugations successifs) puis séchage, par exemple dans une étuve (60°C, 2 jours), par lyophilisation, par séchage par atomisation ou encore par séchage sous irradiation de micro-ondes. Les particules silico/germano-métalliques de formule $(Si_xGe_{1-x})_4M_3O_{11}$, n'$H_2O$ peuvent ainsi être stockées sous la forme d'une poudre en vue d'un traitement hydrothermal ultérieur. Les particules silico/germano-métalliques obtenues sont, si nécessaire, broyées à l'aide d'un mortier (par exemple un mortier en agate) de façon à obtenir une poudre homogène.

2/ - Traitement hydrothermal du gel silico/germano-métallique

Le gel silico/germano-métallique tel que précédemment obtenu est soumis à un traitement hydrothermal, à une température comprise entre 150°C et 600°C, et notamment à une température comprise entre 150°C et 400°C.

Pour procéder au traitement hydrothermal :

1. on place le gel, dans un réacteur (de 400 ml) ; éventuellement on ajuste le rapport eau/solide en ajoutant de l'eau, notamment pour éviter la calcination de la fraction solide) ; afin d'éviter tout problème de fuite du réacteur, celui-ci est rempli aux 2/3 de son volume,
2. éventuellement, on ajoute sous agitation une solution comprenant au moins un sel carboxylate de formule R8-COOM', sous une forme hydratée ou anhydre, X désignant un métal choisi dans le groupe formé de Na et K, et $R_2$ étant choisi dans le groupe formé de H et des groupements alkyles comprenant moins de 5 atomes de carbone,
3. le réacteur est placé à l'intérieur d'une étuve ou d'un four à conduction, à la température de réaction (établie entre 150°C et 600°C, en particulier entre 150°C et 400°C), pendant toute la durée du traitement (30 minutes à 60 jours).

A l'issue de ce traitement hydrothermal, on obtient une composition talqueuse colloïdale comprenant des particules minérales phyllosilicatées, en solution dans l'eau.

Le sel carboxylate éventuellement présent pendant le traitement hydrothermal peut être ajouté au moment de réaliser ledit traitement hydrothermal et/ou provenir du milieu de précipitation du gel silico/germano-métallique conformément à la deuxième variante de préparation de l'hydrogel silico/germano-métallique. La réalisation du traitement hydrothermal en présence d'un sel carboxylate permet d'améliorer la réaction de conversion de l'hydrogel silico/germano-métallique en une composition talqueuse comprenant des particules minérales phyllosilicatées, notamment en l'accélérant. Dans les cas où le traitement hydrothermal est réalisé en présence d'un tel sel carboxylate, une température à l'intérieur de l'étuve ou de l'autoclave comprise entre 150°C et 400°C est suffisante.

Au terme de ce traitement hydrothermal, le contenu du réacteur est récupéré après filtration et/ou éventuellement centrifugation (par exemple entre 3000 et 15 000 tours par minute, pendant 5 à 60 minutes) et élimination du surnageant. La composition talqueuse récupérée est éventuellement séchée, par exemple dans une étuve (60°C, 2 jours), par lyophilisation, par séchage par atomisation ou encore par séchage sous irradiation de micro-ondes.

Au terme d'un tel traitement hydrothermal, on obtient une composition solide divisée comprenant par exemple des particules de talc synthétique de formule $Si_4Mg_3O_{10}(OH)_2$.

B/ - PROCÉDÉ DE PRÉPARATION D'UNE COMPOSITION COMPRENANT DES PARTICULES MINÉRALES FONCTIONNALISÉES SELON L'INVENTION

Les particules minérales telles que précédemment préparées, par exemple des particules de talc synthétique $Si_4Mg_3O_{10}(OH)_2$, sont mises en contact avec une solution comprenant au moins un oxysilane et/ou au moins un oxygermane présentant au moins un groupement organique choisi dans le groupe formé des groupements hétéroaryles cationiques, des groupements ammonium quaternaire et de leurs sels.

L'agent de fonctionnalisation (oxysilane et/ou oxygermane) a pour formule chimique :

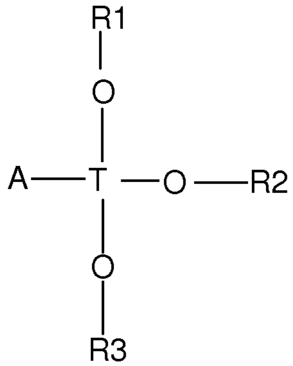

(I)

dans laquelle :

- A désigne ledit groupement organique choisi dans le groupe formé des groupements hétéroaryles cationiques, des groupements ammonium quaternaire et de leurs sels,
- T est choisi parmi le silicium et le germanium, et

- R1, R2 et R3 sont identiques ou différents, et choisis dans le groupe formé de l'hydrogène et des groupements alkyles linéaires comprenant 1 à 3 atome(s) de carbone.

L'agent de fonctionnalisation peut éventuellement polymériser dans la solution de fonctionnalisation et se présenter dans une faible proportion sous la forme suivante :

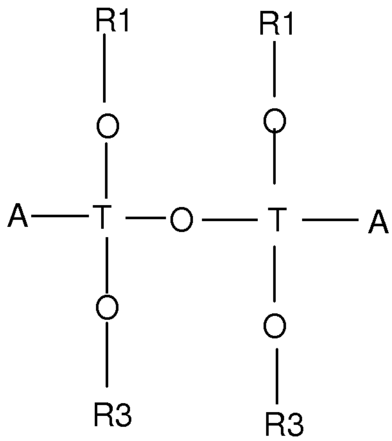

ou encore sous la forme d'autres produits de cette polymérisation.
Pour ce faire :

1. on place 1 gramme des particules minérales phyllosilicatées préalablement séchées à l'étuve dans 40 mL d'une solution aqueuse dans laquelle est dissous au moins un oxysilane fonctionnalisé et/ou au moins un oxygermane fonctionnalisé, tel que défini précédemment pendant 1 heure, sous agitation, la concentration de ce composé dans la solution étant par exemple de 0,015 mol/L,
2. on récupère les particules par centrifugation de la solution, par exemple pendant 10 minutes à 10 000 tours/minute, et élimination de la solution surnageante,
3. on rince une à deux fois les particules avec de l'eau distillée, par centrifugation, par exemple pendant 10 minutes à 10 000 tours/minute, et élimination de la solution surnageante à chaque fois, de façon à éliminer les oxysilanes et/ou oxygermanes en excédant, et
4. on sèche les particules obtenues, par exemple par lyophilisation.

En particulier, ledit oxysilane peut être un trialcoxysilane soluble en milieu aqueux et de formule suivante :

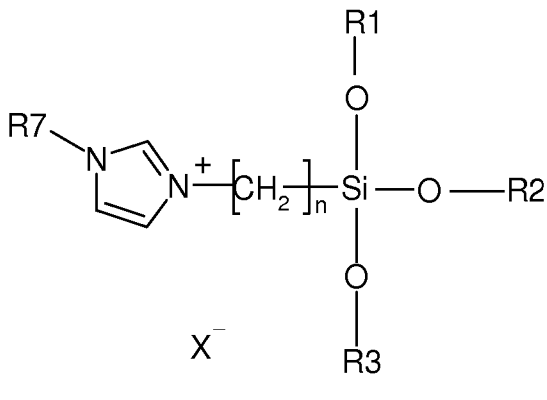

dans laquelle :

- R1, R2 et R3, sont identiques ou différents, et choisis parmi les groupements alkyles linéaires comprenant 1 à 3 atome(s) de carbone,
- R7 est choisi parmi les groupements alkyles linéaires comprenant 1 à 18 atome(s) de carbone,
- n est un nombre entier compris entre 1 et 5, et
- $X^-$ est un anion dans lequel X est choisi dans le groupe formé du chlore, de l'iode et du brome.

Il est ensuite possible de réaliser un échange au moins partiel de l'anion $X^-$ par au moins une espèce anionique différente de $X^-$ et choisie dans le groupe formé de l'ion bromure $Br^-$, l'ion iodure $I^-$, l'anion bis-trifluorométhanesulfonamidure, l'anion trifluorométhanesulfonate, l'anion hexafluorophosphate, l'anion tétrafluoroborate, l'anion acétate, l'anion nitrate $NO_3^-$ et l'anion nitrite $NO_2^-$. Un tel échange par métathèse permet de moduler à façon le caractère plus ou moins hydrophile ou hydrophobe des particules minérales fonctionnalisées préparées. On peut par exemple utiliser un sel métallique tel qu'un sel d'argent (un nitrate d'argent $AgNO_3$ notamment) ou un sel de lithium (tel que le bis-trifluorométhanesulfonamidure de lithium, par exemple).

C/ - ANALYSE ET CARACTERISATION STRUCTURELLE

La taille et la distribution granulométrique des particules minérales phyllosilicatées qui les composent ont été appréciées par observation en microscopie électronique à balayage et à effet de champ.

On constate que la granulométrie des particules élémentaires varie entre 20 nm et 100 nm. En particulier, les particules minérales phyllosilicatées présentent une épaisseur inférieure à 100 nm et une plus grande dimension inférieure à 10 $\mu$m.

D'autre part, des mesures de la surface spécifique (aire de la surface des particules rapportée à une unité de masse) des particules minérales préparées, déterminées selon la méthode BET par la quantité d'azote adsorbée à la surface desdites particules de façon à former une couche monomoléculaire recouvrant complètement ladite surface (mesures selon la méthode BET, norme AFNOR X 11 - 621 et 622), ont été effectuées. On constate que la surface spécifique des particules minérales phyllosilicatées comprises dans une composition obtenue par un procédé selon l'invention est de l'ordre de 700 $m^2/g$.

Une telle valeur de surface spécifique, alors que la surface spécifique d'un talc naturel est de l'ordre de 20 $m^2/g$, est non seulement révélatrice d'une très faible granulométrie et du caractère lamellaire des particules mais également de l'état divisé ou désaggloméré des particules et notamment d'une exfoliation des feuillets élémentaires formant lesdites particules.

EXEMPLE 1

On prépare une suspension comprenant des particules de talc de formule $Si_4Mg_3O_{10}(OH)_2$ comprenant 100 g de gel de talc (soit 10 g de talc sec) dans 300 mL d'eau. La suspension est agité magnétiquement et simultanément soumise aux ultrasons jusqu'à obtenir une suspension de consistance homogène et d'aspect laiteux.

On ajoute ensuite l'oxysilane fonctionnalisé à cette suspension comprenant des particules de talc. On ajoute 1 g de chlorure de 1-(triméthoxy-silyl-propyl)-3-méthyl-imidazolium préalablement dilué dans 20 mL d'eau. On met ainsi en contact l'oxysilane et les particules de talc dans la solution de fonctionnalisation de telle façon que le rapport molaire entre l'oxysilane et les particules de talc est de 0,13. L'agitation magnétique et la sonication sont maintenues pendant 10 minutes.

Le chlorure de 1-(triméthoxy-silyl-propyl)-3-méthyl-imidazolium a pour formule chimique développée la formule suivante :

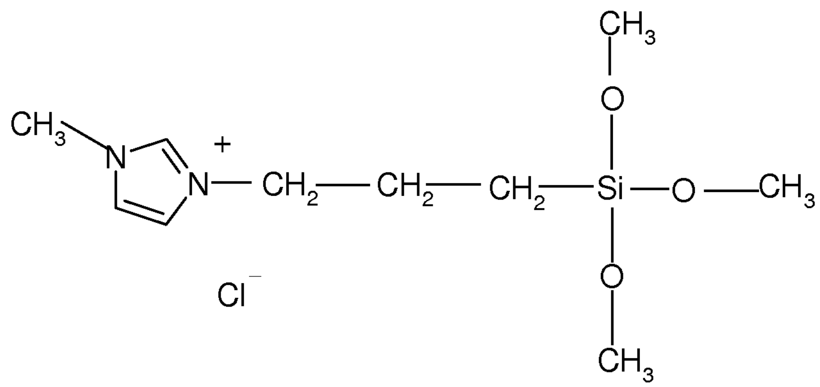

La suspension est ensuite centrifugée à 10 000 tours/min pendant 10 minutes et la solution surnageante composé d'eau et d'oxysilane fonctionnalisé en excès.

On soumet ensuite la composition talqueuse fonctionnalisée récupérée à un lavage à l'eau déminéralisée et centrifugation.

La composition talqueuse récupérée après centrifugation est finalement séchée par lyophilisation (piège à

-52°C et vide de 0,087 mbar).

La composition talqueuse obtenue comprend 0,03 mmole d'oxysilane par gramme de talc (mesure effectuée par analyse élémentaire).

La surface spécifique de la composition talqueuse obtenue mesurée selon la méthode BET est de 764 $m^2/g$.

Le diffractogramme des rayons X de la composition de talc ainsi obtenue est représenté sur la figure 1. Le diffractogramme des rayons X de cette composition talqueuse présente des raies de diffraction correspondant aux raies de diffraction du talc fonctionnalisé, et en particulier les raies de diffraction caractéristiques suivantes :

- un plan (001) situé à une distance de 11,074 Å (I =100) ;
- un plan (020) situé à une distance de 4,554 Å (I =33);
- un plan (003) situé à une distance de 3,173 Å (I =67);
- un plan (060) situé à une distance de 1,512 Å (I =16).

Le spectre en RMN du proton (figure 2) des particules minérales préparées permet d'identifier la présence des H des groupements Mg(OH) des feuillets de talc (déplacements chimiques compris entre 0 et 1 ppm), les H du cycle de l'imidazolium (déplacements chimiques compris entre 6 ppm et 9 ppm) et de l'eau (déplacement chimique compris entre 3 et 5 ppm).

Le spectre en RMN du carbone (figure 3) des particules minérales préparées permet d'identifier la présence d'un groupement imidazolium (déplacements chimiques compris entre 115 ppm et 140 ppm) ainsi que la présence d'un groupement méthyle et de groupements méthylène (déplacements chimiques compris entre 0 ppm et 60 ppm, dont le méthylène de la liaison $CH_2$-Si entre 9 ppm et 10 ppm).

Le spectre en RMN du silicium (figure 4) des particules minérales préparées permet d'identifier la présence de groupements Si-O-Si (déplacements chimiques compris entre -80 ppm et -100 ppm).

Les spectres en RMN du proton, du carbone et du silicium ont été obtenus avec un champ magnétique de 9,4 Tesla.

La figure 5 est une image obtenue par microscopie électronique à balayage et à effet de champ (MEB-FEG) des particules minérales préparées.

Ces analyses permettent donc de montrer que la fonctionnalisation du talc est bien réalisée par fixation d'un oxysilane porteur d'un groupement imidazolium par liaison covalente avec le talc. Il s'agirait en particulier de liaisons de type Si-O-Si entre un atome de silicium du talc et le silicium de l'oxysilane. En outre, la composition talqueuse fonctionnalisée préparée par un procédé selon l'invention comprend des particules de talc individualisées et désagglomérées présentant une surface spécifique très importante.

L'invention peut faire l'objet de nombreuses autres applications et de diverses variantes par rapport aux modes de réalisation et exemples décrits ci-dessus. En particulier, d'autres oxysilanes et des oxygermanes peuvent également être utilisés à titre d'agent de fonctionnalisation des particules minérales phyllosilicatées.

## Revendications

**1.** Procédé de préparation d'une composition comprenant des particules minérales fonctionnalisées par au moins un groupement organique et présentant une surface spécifique déterminée selon la méthode BET -norme AFNOR X 11 - 621 et 622- supérieure à 500 $m^2/g$, dans lequel :

- on choisit une composition, dite composition phyllosilicatée, comprenant des particules minérales appartenant à la famille des silicates lamellaires, lesdites particules minérales présentent une épaisseur inférieure à 100 nm et une plus grande dimension inférieure à 10 $\mu$m ;
- on choisit au moins un composé, dit agent de fonctionnalisation, dans le groupe formé des oxysilanes et des oxygermanes présentant au moins un groupement organique,
- on met en contact ladite composition phyllosilicatée avec une solution, dite solution de fonctionnalisation, comprenant ledit agent de fonctionnalisation, de façon à obtenir une composition phyllosilicatée comprenant des particules minérales fonctionnalisées par ledit groupement organique,

**caractérisé en ce que** :

- on choisit le groupement organique dans le groupe formé des groupements hétéroaryles cationiques et de leurs sels.
- ledit agent de fonctionnalisation a pour formule chimique :

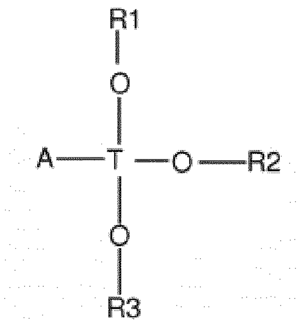

(I)

dans laquelle :

- A désigne ledit groupement organique,
- T est choisi dans le groupe formé du silicium et du germanium, et
- R1, R2 et R3 sont identiques ou différents, et choisis dans le groupe formé de l'hydrogène et des groupements alkyles linéaires comprenant 1 à 3 atome(s) de carbone.

2. Procédé selon la revendication 1, **caractérisé en ce que** ledit groupement organique a pour formule chimique :

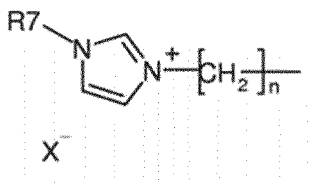

dans laquelle :

- R7 est choisi parmi les groupements alkyles linéaires ou ramifiés comprenant 1 à 18 atome(s) de carbone,
- n est un nombre entier compris entre 3 et 11,
- X- est un anion choisi dans le groupe formé de l'ion bromure, l'ion iodure, l'ion chlorure, l'anion trifluorométhanesulfonate, l'anion acétate, l'anion nitrate et l'anion nitrite

3. Procédé selon la revendication 2, **caractérisé en ce qu'**après avoir mis en contact ladite composition phyllosilicatée avec la solution de fonctionnalisation on réalise un échange au moins partiel de l'anion $X^-$ par au moins une espèce anionique différente de $X^-$ et choisie dans le groupe formé de l'ion bromure, l'ion iodure, l'anion bis-(trifluorométhanesulfonyl)amidure, l'anion trifluorométhanesulfonate, l'anion hexafluorophosphate, l'anion tétrafluoroborate, l'anion acétate, l'anion nitrate et l'anion nitrite.

4. Procédé selon l'une des revendications 2 ou 3, **caractérisé en ce qu'**après avoir mis en contact ladite composition phyllosilicatée avec la solution de fonctionnalisation, on réalise un échange au moins partiel de l'anion $X^-$, lorsque X est choisi dans le groupe formé du chlore, du brome et de l'iode, en ajoutant au moins un sel d'argent.

5. Procédé selon l'une des revendications 1 à 4, **caractérisé en ce que** ladite composition phyllosilicatée comprend des particules minérales ayant pour formule chimique :

$$(Si_xGe_{1-x})_4M_3O_{10}(OH)_2$$

- Si désignant le silicium,
- Ge désignant le germanium,
- x étant un nombre réel de l'intervalle [0 ;1], et
- M désignant un métal.

6. Procédé selon l'une des revendications 1 à 5, **caractérisé en ce qu'**on choisit ledit agent de fonctionnalisation dans le groupe formé des oxysilanes et des oxygermanes solubles en milieu aqueux.

**7.** Procédé selon l'une des revendications 1 à 6, **caractérisé en ce que** ladite solution de fonctionnalisation est une solution aqueuse.

**8.** Procédé selon l'une des revendications 1 à 7, **caractérisé en ce que** lesdites particules minérales sont choisies dans le groupe des phyllosilicates 2:1.

**9.** Procédé selon l'une des revendications 1 à 8, **caractérisé en ce qu'**on prépare lesdites particules minérales par un traitement hydrothermal d'un hydrogel précurseur silico/germano-métallique comprenant des particules de formule $(Si_xGe_{1-x})_4M_3O_{11}$, n'$H_2O$ dans laquelle :

- Si désigne le silicium,
- Ge désigne le germanium,
- x est un nombre réel de l'intervalle [0 ; 1],
- M désigne un atome métallique,
- n' est relatif à un nombre de molécule(s) d'eau associée(s) audit hydrogel.

**10.** Procédé selon la revendication 9, **caractérisé en ce qu'**on prépare l'hydrogel précurseur par une réaction de coprécipitation entre :

- au moins un composé comprenant du silicium et/ou du germanium tel que le métasilicate de sodium ou le métagermanate de sodium ou encore la silice, et
- au moins un sel métallique,

de façon à obtenir un hydrogel précurseur silico/germano-métallique hydraté comprenant 4 atomes de silicium et/ou de germanium pour 3 atomes d'au moins un métal M.

**11.** Composition susceptible d'être obtenue par un procédé selon l'une des revendications 1 à 9, dite composition phyllosilicatée, comprenant des particules minérales appartenant à la famille des silicates lamellaires, **caractérisée en ce que** lesdites particules minérales présentent :

- une épaisseur inférieure à 100 nm et une plus grande dimension inférieure à 10 $\mu$m;
- une surface spécifique déterminée selon la méthode BET -norme AFNOR X 11 - 621 et 622- supérieure à 500 $m^2$/g, et ;
- au moins un groupement organique choisi dans le groupe formé des groupements hétéroaryles cationiques et de leurs sels.

**12.** Composition phyllosilicatée selon la revendication 11, **caractérisée en ce qu'**elle comprend des particules minérales ayant pour formule chimique:

$$(Si_xGe_{1-x})_4M_3O_{10}(OH)_2$$

- Si désignant le silicium,
- Ge désignant le germanium,
- x étant un nombre réel de l'intervalle [0 ;1], et
- M désignant un métal.

**13.** Composition phyllosilicatée selon l'une des revendications 11 ou 12, **caractérisée en ce que** lesdites particules minérales présentent une surface spécifique supérieure à 600 $m^2$/g.

**Patentansprüche**

**1.** Verfahren zum Herstellen einer Zusammensetzung, die Mineralpartikel umfasst, die durch mindestens eine organische Gruppierung funktionalisiert sind und eine gemäß dem BET-Verfahren - Norm AFNORX 11-621 und 622- bestimmte spezifische Oberfläche von mehr als 500 $m^2$/g aufweisen, wobei:

- eine als phyllosilikatische Zusammensetzung bezeichnete Zusammensetzung ausgewählt wird, die Mineralpartikel umfasst, die zur Familie der lamellaren Silikate gehören, wobei die Mineralpartikel eine Dicke von

weniger als 100 nm und eine größte Abmessung von weniger als 10 µm aufweisen;
- mindestens eine als Funktionalisierungsmittel bezeichnete Verbindung aus der Gruppe ausgewählt wird, die aus Oxysilanen und Oxygermanen gebildet wird, die mindestens eine organische Gruppierung aufweisen,
- die phyllosilikatische Zusammensetzung mit einer als Funktionalisierungslösung bezeichneten Lösung, die das Funktionalisierungsmittel umfasst, in Kontakt gebracht wird, um eine phyllosilikatische Zusammensetzung zu erhalten, die durch die organische Gruppierung funktionalisierte Mineralpartikel umfasst,

**dadurch gekennzeichnet, dass**:

- die organische Gruppierung aus der Gruppe ausgewählt wird, die aus kationischen Heteroarylgruppierungen und deren Salzen gebildet wird,
- das Funktionalisierungsmittel die folgende chemische Formel aufweist:

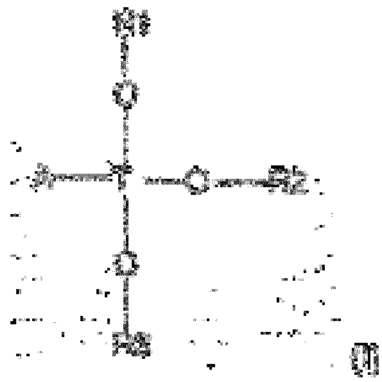

wobei:

- A die organische Gruppierung bezeichnet,
- T aus der Gruppe ausgewählt wird, die aus Silizium und Germanium gebildet wird, und
- R1, R2 und R3 identisch oder unterschiedlich sind und aus der Gruppe ausgewählt werden, die aus Wasserstoff und linearen Alkylgruppierungen mit 1 bis 3 Kohlenstoffatomen gebildet wird.

2. Verfahren nach Anspruch 1, **dadurch gekennzeichnet, dass** die organische Gruppierung die folgende chemische Formel aufweist:

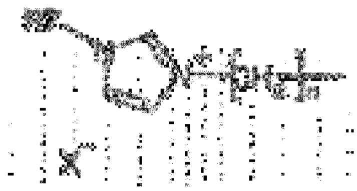

wobei:

- R7 aus den linearen oder verzweigten Alkylgruppierungen mit 1 bis 18 Kohlenstoffatom(en) ausgewählt wird,
- n eine ganze Zahl zwischen 3 und 11 ist,
- X- ein Anion ist, das aus der Gruppe ausgewählt wird, die aus Bromidion, Iodidion, Chloridion, Trifluormethansulfonatanion, Acetatanion, Nitratanion und dem Nitritanion gebildet wird.

3. Verfahren nach Anspruch 2, **dadurch gekennzeichnet, dass** nach dem Inkontaktbringen der phyllosilikatischen Zusammensetzung mit der Funktionalisierungslösung ein mindestens teilweiser Austausch des Anions $X^-$ durch mindestens eine anionische Spezies durchgeführt wird, die von $X^-$ verschieden ist und aus der Gruppe ausgewählt wird, die aus Bromidion, Iodidion, Bis(trifluormethansulfonyl)amid-Anion, Trifluormethansulfonatanion, Hexafluorphosphatanion, Tetrafluorboratanion, Acetatanion, Nitratanion und Nitritanion gebildet wird.

4. Verfahren nach einem der Ansprüche 2 oder 3, **dadurch gekennzeichnet, dass** nach dem Inkontaktbringen der phyllosilikatischen Zusammensetzung mit der Funktionalisierungslösung ein mindestens teilweiser Austausch des Anions $X^-$, wenn X aus der Gruppe ausgewählt wird, die aus Chlor, Brom und Jod gebildet wird, durch Zugabe von mindestens einem Silbersalz durchgeführt wird.

5. Verfahren nach einem der Ansprüche 1 bis 4, **dadurch gekennzeichnet, dass** die phyllosilikatische Zusammensetzung Mineralpartikel mit der folgenden chemischen Formel umfasst:

$$(Si_xGe_{1-x})_4M_3O_{10}(OH)_2$$

- Si bezeichnet Silizium,
- Ge bezeichnet Germanium,
- x ist eine reelle Zahl des Intervalls [0; 1], und
- M bezeichnet ein Metall.

6. Verfahren nach einem der Ansprüche 1 bis 5, **dadurch gekennzeichnet, dass** das Funktionalisierungsmittel aus der Gruppe ausgewählt wird, die aus Oxysilanen und Oxygermanen gebildet wird, die in wässrigen Medien löslich sind.

7. Verfahren nach einem der Ansprüche 1 bis 6, **dadurch gekennzeichnet, dass** die Funktionalisierungslösung eine wässrige Lösung ist.

8. Verfahren nach einem der Ansprüche 1 bis 7, **dadurch gekennzeichnet, dass** die Mineralpartikel aus der Gruppe der 2:1-Phyllosilikate ausgewählt werden.

9. Verfahren nach einem der Ansprüche 1 bis 8, **dadurch gekennzeichnet, dass** die Mineralpartikel durch eine hydrothermale Behandlung eines silizium-/germanium-metallischen Hydrogel-Vorläufers hergestellt werden, der Partikel der Formel $(Si_xGe_{1-x})_4M_3O_{11}$, n' $H_2O$ umfasst, wobei:

- Si Silizium bezeichnet,
- Ge Germanium bezeichnet,
- x eine reelle Zahl des Intervalls [0; 1] ist,
- M ein Metallatom bezeichnet,
- n' sich auf eine Anzahl von Wassermolekülen, die dem Hydrogel zugeordnet sind, bezieht.

10. Verfahren nach Anspruch 9, **dadurch gekennzeichnet, dass** der Hydrogel-Vorläufer durch eine Co-Präzipitationsreaktion hergestellt wird zwischen:

- mindestens einer Verbindung, die Silizium und/oder Germanium, wie Natriummetasilikat oder Natriummetagermanat, oder auch Silizium umfasst, und
- mindestens einem Metallsalz,

um einen hydratisierten silizium-/germanium-metallischen Hydrogel-Vorläufer zu erhalten, der Silicium und/oder Germanium und ein Metall enthält, der 4 Silizium- und/oder Germaniumatome für 3 Atome mindestens eines Metalls M umfasst.

11. Zusammensetzung, die durch ein Verfahren nach einem der Ansprüche 1 bis 9 erhalten werden kann, wobei die sogenannte phyllosilikatische Zusammensetzung Mineralpartikel umfasst, die zur Familie der lamellaren Silikate gehören, **dadurch gekennzeichnet, dass** die Mineralpartikel Folgendes aufweisen:

- eine Dicke von weniger als 100 nm und eine größte Abmessung von weniger als 10 µm;
- eine gemäß dem BET-Verfahren - Norm AFNOR X 11 - 621 und 622 - bestimmte spezifische Oberfläche von mehr als 500 $m^2/g$, und
- mindestens eine organische Gruppierung, die aus der Gruppe ausgewählt wird, die aus kationischen Heteroarylgruppierungen und deren Salzen gebildet wird.

12. Phyllosilikatische Zusammensetzung nach Anspruch 11, **dadurch gekennzeichnet**, **dadurch gekennzeichnet, dass** sie Mineralpartikel mit der folgenden chemischen Formel umfasst:

$$(Si_xGe_{1-x})_4M_3O_{10}(OH)_2$$

- Si bezeichnet Silizium,
- Ge bezeichnet Germanium,
- x ist eine reelle Zahl des Intervalls [0; 1], und
- M bezeichnet ein Metall.

**13.** Phyllosilikatische Zusammensetzung nach einem der Ansprüche 11 oder 12, **dadurch gekennzeichnet, dass** die Mineralpartikel eine spezifische Oberfläche von mehr als 600 $m^2/g$ aufweisen.

## Claims

**1.** - Method for preparing a composition comprising mineral particles functionalised by at least one organic group and having a specific surface area determined according to the BET method - standard AFNOR X 11 - 621 and 622 - of greater than 500 $m^2/g$, wherein:

- there is chosen a composition, named the phyllosilicate composition, comprising mineral particles belonging to the family of the lamellar silicates, said mineral particles having a thickness of less than 100 nm and a largest dimension of less than 10 µm;
- there is chosen at least one compound, named the functionalising agent, from the group formed of oxysilanes and oxygermanes having at least one organic group,
- said phyllosilicate composition is brought into contact with a solution, named the functionalising solution, comprising said functionalising agent, so as to obtain a phyllosilicate composition comprising mineral particles functionalised by said organic group,

**characterised in that**:

- the organic group is chosen from the group formed of cationic heteroaryl groups and their salts,
- said functionalising agent has the chemical formula:

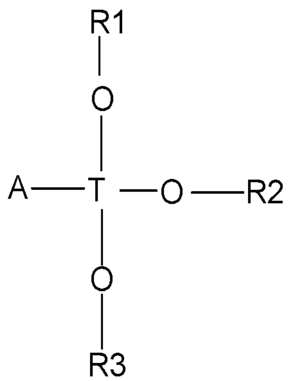

(I)

wherein:

- A denotes said organic group,
- T is chosen from the group formed of silicon and germanium, and
- R1, R2 and R3 are identical or different and are chosen from the group formed of hydrogen and linear alkyl groups containing from 1 to 3 carbon atom(s).

**2.** - Method according to claim 1, **characterised in that** said organic group has the chemical formula:

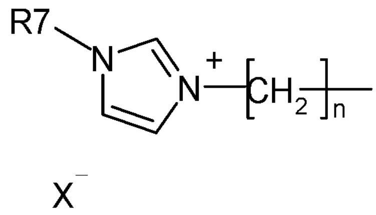

wherein:

- R7 is chosen from linear or branched alkyl groups containing from 1 to 18 carbon atom(s),
- n is an integer from 3 to 11,
- X- is an anion chosen from the group formed of the bromide ion, the iodide ion, the chloride ion, the trifluoromethanesulfonate anion, the acetate anion, the nitrate anion and the nitrite anion.

**3.** - Method according to claim 2, **characterised in that**, after said phyllosilicate composition has been brought into contact with the functionalising solution, there is carried out an at least partial exchange of the anion $X^-$ by at least one anionic species which is different from $X^-$ and is chosen from the group formed of the bromide ion, the iodide ion, the bis(trifluoromethanesulfonyl)amide anion, the trifluoromethanesulfonate anion, the hexafluorophosphate anion, the tetrafluoroborate anion, the acetate anion, the nitrate anion and the nitrite anion.

**4.** - Method according to either claim 2 or 3, **characterised in that**, after said phyllosilicate composition has been brought into contact with the functionalising solution, there is carried out an at least partial exchange of the anion $X^-$, when X is chosen from the group formed of chlorine, bromine and iodine, by adding at least one silver salt.

**5.** - Method according to any one of claims 1 to 4, **characterised in that** said phyllosilicate composition comprises mineral particles having the chemical formula:

$$(Si_xGe_{1-x})_4M_3O_{10}(OH)_2$$

- Si denoting silicon,
- Ge denoting germanium,
- x being a real number of the interval [0 ;1], and
- M denoting a metal.

**6.** - Method according to any one of claims 1 to 5, **characterised in that** said functionalising agent is chosen from the group formed of oxysilanes and oxygermanes which are soluble in an aqueous medium.

**7.** - Method according to any one of claims 1 to 6, **characterised in that** said functionalising solution is an aqueous solution.

**8.** - Method according to any one of claims 1 to 7, **characterised in that** said mineral particles are chosen from the group of the 2:1 phyllosilicates.

**9.** - Method according to any one of claims 1 to 8, **characterised in that** said mineral particles are prepared by a hydrothermal treatment of a hydrogel precursor containing silicon and/or germanium and a metal, said hydrogel precursor comprising particles of the formula $(Si_xGe_{1-x})_4M_3O_{11}$, $n'H_2O$, wherein:

- Si denotes silicon,
- Ge denotes germanium,
- x is a real number of the interval [0 ; 1],
- M denotes a metal atom,
- n' relates to a number of molecule(s) of water associated with said hydrogel.

**10.** - Method according to claim 9, **characterised in that** the hydrogel precursor is prepared by a coprecipitation reaction between:

- at least one compound comprising silicon and/or germanium, such as sodium metasilicate or sodium metagermanate or also silicon, and
- at least one metal salt,

so as to obtain a hydrated hydrogel precursor containing silicon and/or germanium and a metal comprising 4 silicon and/or germanium atoms for 3 atoms of at least one metal M.

**11.** - Composition obtainable by a method according to any one of claims 1 to 9, named phyllosilicate composition, comprising mineral particles belonging to the family of the lamellar silicates, **characterised in that** said mineral particles have:

- a thickness of less than 100 nm and a largest dimension of less than 10 μm;
- a specific surface area determined according to the BET method - standard AFNOR X 11 - 621 and 622 - of greater than 500 $m^2/g$; and
- at least one organic group chosen from the group formed of cationic heteroaryl groups and their salts.

**12.** - Phyllosilicate composition according to claim 11, **characterised in that** it comprises mineral particles having the chemical formula:

$$(Si_xGe_{1-x})_4M_3O_{10}(OH)_2$$

- Si denoting silicon,
- Ge denoting germanium,
- x being a real number of the interval [0 ;1],
- M denoting a metal.

**13.** - Phyllosilicate composition according to either claim 11 or 13, **characterised in that** said mineral particles have a specific surface area of greater than 600 $m^2/g$.

Fig 1

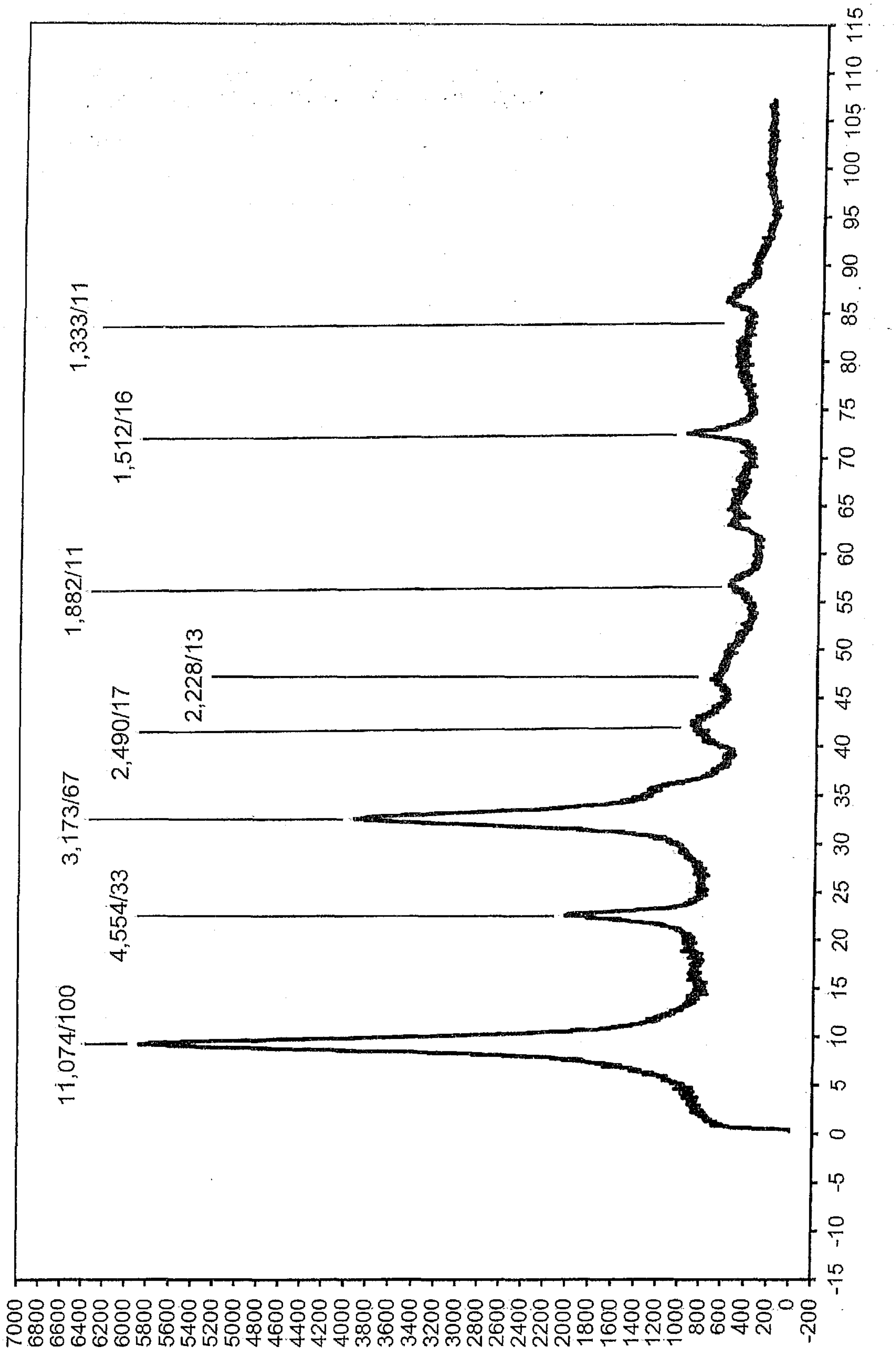
11,074/100
4,554/33
3,173/67
2,490/17
2,228/13
1,882/11
1,512/16
1,333/11
-15 -10 -5 0 5 10 15 20 25 30 35 40 45 50 55 60 65 70 75 80 85 90 95 100 105 110 115
7000 6800 6600 6400 6200 6000 5800 5600 5400 5200 5000 4800 4600 4400 4200 4000 3800 3600 3400 3200 3000 2800 2600 2400 2200 2000 1800 1600 1400 1200 1000 800 600 400 200 0 -200

Fig 2

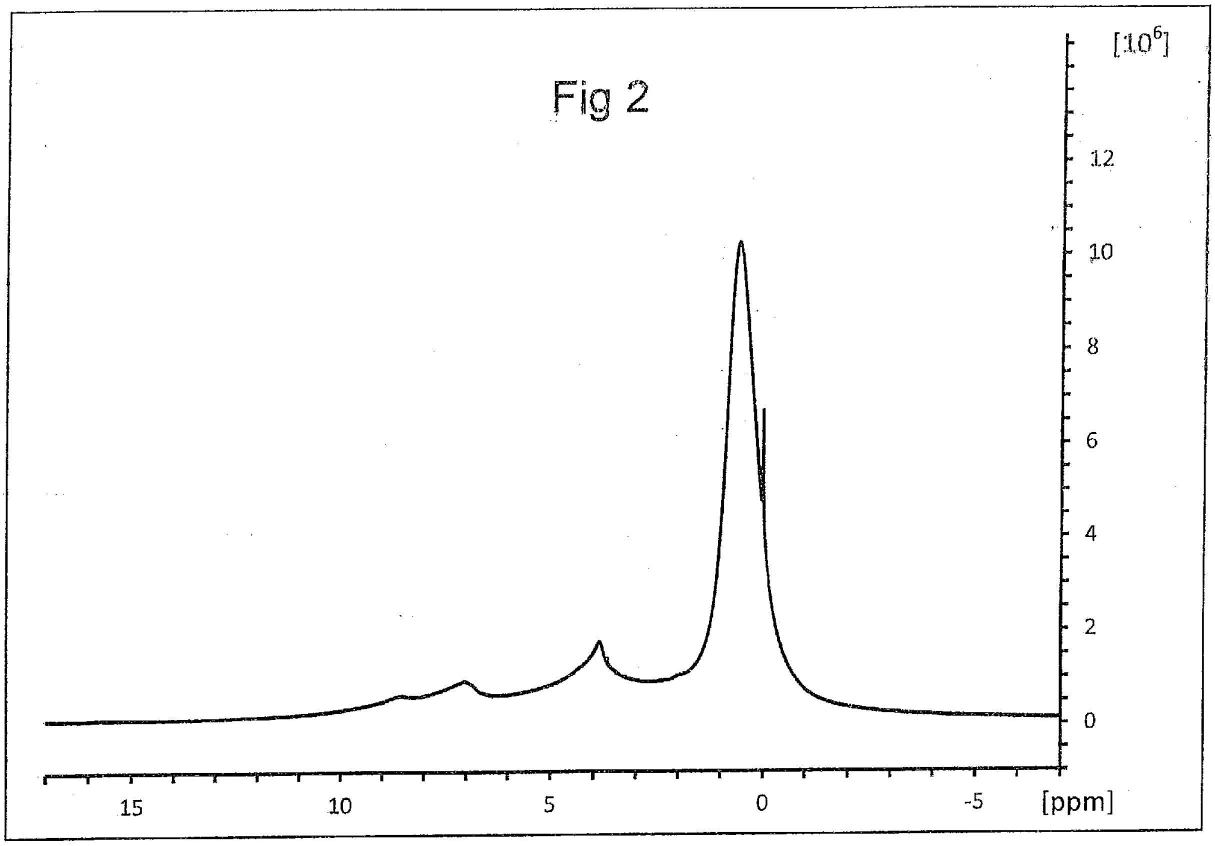


Fig 3

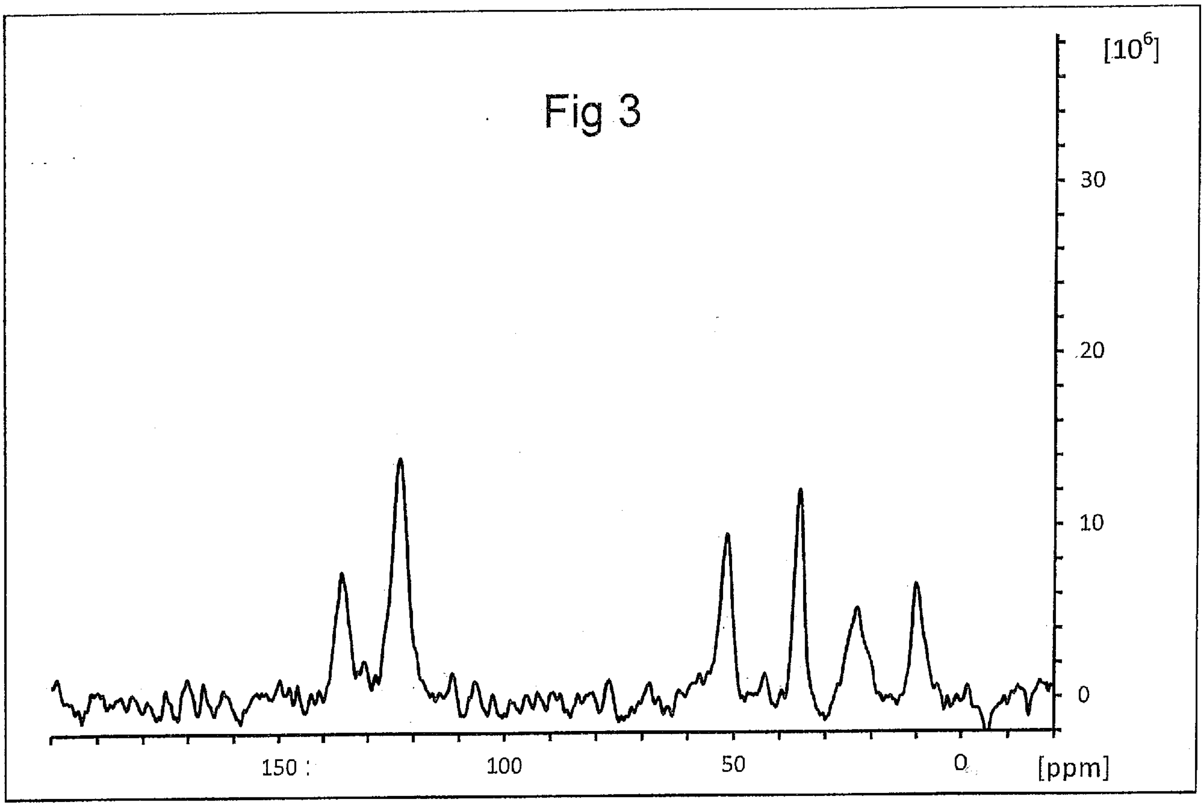

Fig 4

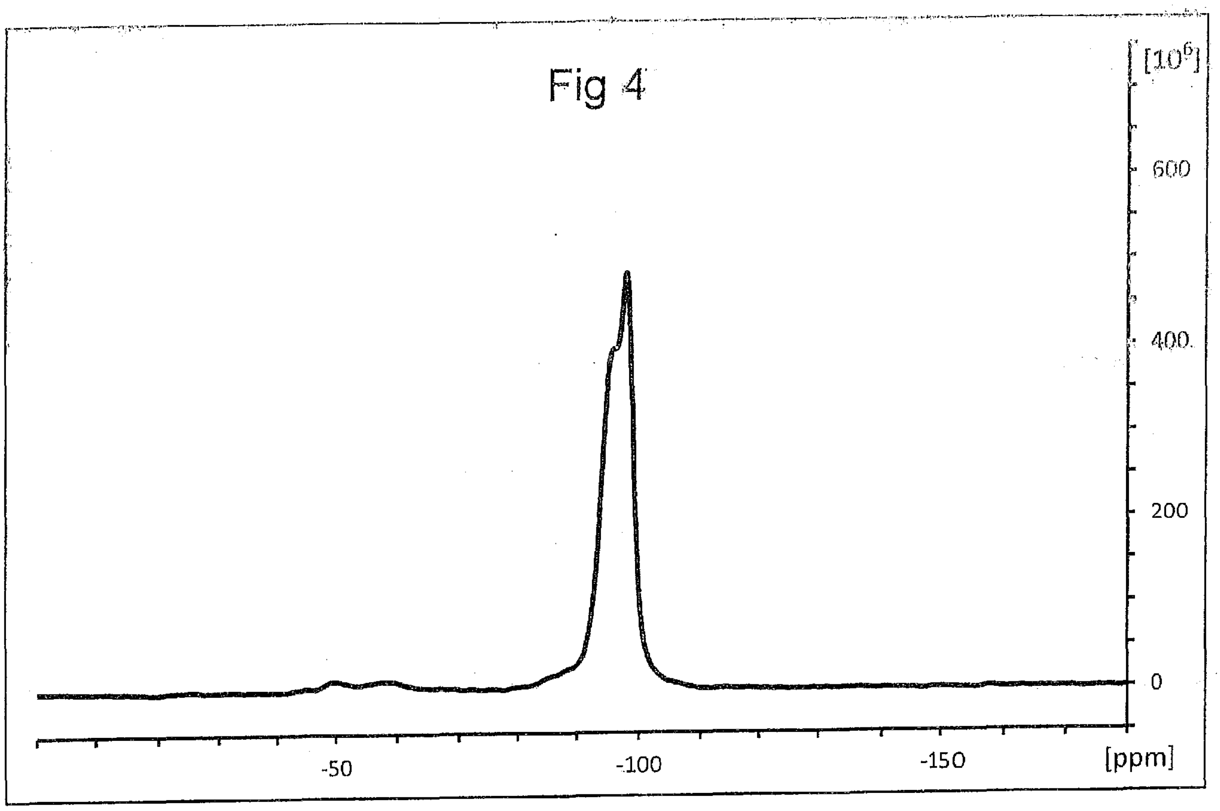


Fig 5

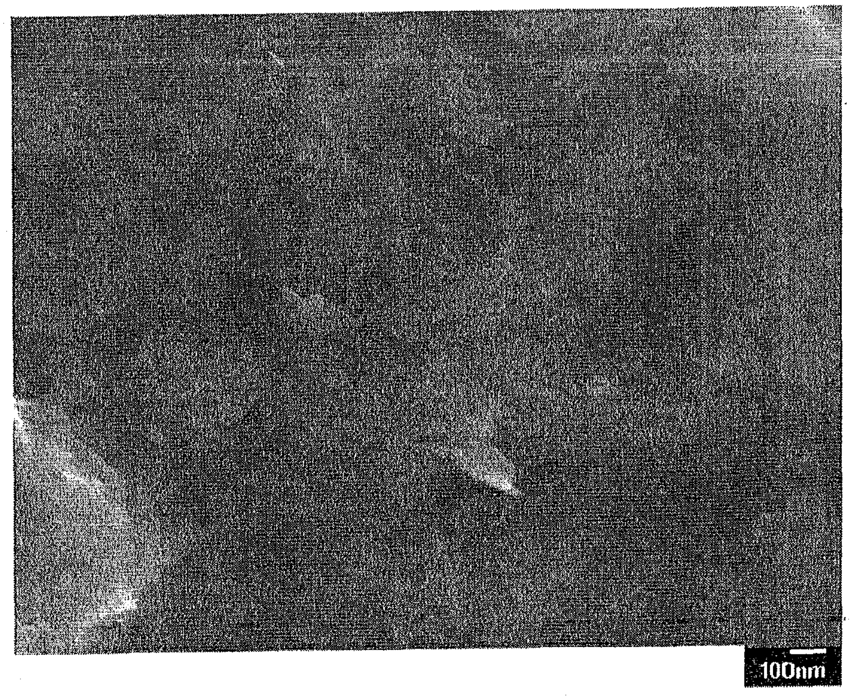

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **TAKAHASHI N et al.** *Chem. Mater.,* 2010, vol. 22 (11), 3340-3348